Europäisches Patentamt

European Patent Office

Office européen des brevets

(11) Publication number: **0 383 969**
**A1**

## (12) EUROPEAN PATENT APPLICATION

(21) Application number: **89103098.3**

(22) Date of filing: **22.02.89**

(51) Int. Cl.5 **C08F 8/50, C08F 8/06, C10L 1/16**

(43) Date of publication of application:
**29.08.90 Bulletin 90/35**

(34) Designated Contracting States:
**AT BE DE FR GB IT NL SE**

(71) Applicant: **Wyzsza Szkola Inzynierska im.**
**Kazimierza Pulaskiego**
**ul. Malczewskiego 29**
**Radom(PL)**

(72) Inventor: **Czerwiec, Wojciech, Dr. Chem. Eng.**
**Genewska Str. 4a**
**Warszawa(PL)**
Inventor: **Kwiatek, Aldona, Dr. Chem. Eng.**
**Akademicka Str. 6**
**Radom(PL)**
Inventor: **Slupiczynski, Michal, Dr. Chem. Eng.**
**Bieruta Str. 3**
**Radom(PL)**
Inventor: **Abrysowska-Tyminska, Ida**

**M.Sc.Chem.Eng.**
**Bruna Str.30**
**Warszawa(PL)**
Inventor: **Stoklosa, Tadeusz, M.Sc.Chem.Eng.**
**Kochanowskiego 26**
**Plock(PL)**
Inventor: **Kozlowski, Jerzy, M.Sc.Chem.Eng.**
**Plocka Str. 4**
**Warszawa(PL)**
Inventor: **Dabrowski, Jacek,M.Sc.Chem.Eng.**
**Mieszka 1 Str. 1**
**Plock(PL)**
Inventor: **Prot, Tomasz, Dr.Hab.Chem.**
**Angorska Str. 5/9**
**Warszawa(PL)**

(74) Representative: **Sandmair, Kurt, Dr.**
**Patentanwälte Schwabe, Sandmair, Marx**
**Stuntzstrasse 16**
**D-8000 München 80(DE)**

(54) **Method for depressant obtaining.**

(57) The invention concerns the method for obtaining of depressant that is an agent reducing solidification temperature, especially used for production of lubricating and diesel oils.

According to the invention the depressant is obtained by the method in which waste polyethylene and/or polypropylene are exposed to the process of oxidizing degradation conducted at the elevated temperature up to optaining of the required degree of oxidation and degradation. The oxidation and degradation agent is ozone passed through the bed of waste polyethylene and/or polypropylene heated to the temperature 30 - 350°C.

EP 0 383 969 A1

## Method for Depressant Obtaining

The object of the invention is a method for obtaining of depressant especially for production of fuels and lubricating oils.

As depressants especially suitable for diesel oils there are known ethylene copolymers, for instance copolymer of ethylene with vinyl acetate having the molecular weight 1400 - 2300 and containing 30 - 40% of vinylacetate. From the US patent description no 3454378 there are known ethylene and etoxycaprolactam copolymers of the molecular weight 1000 - 3000 containing 5 - 20% acetoxycaprolactam. There are also known depressive properties of ethylene copolymers with maleic anhydride. From other US patent description there are known as depressants copolymers of polyethylne with propylene - patent no 3524732, decene and dicyclopentadiene - patent no 3393057. Besides, there are known as depressants ternary copolymers of ethylene with high-molecular unsaturated hydrocarbons - US patent description no 3447915, or copolymers of ethylene, olefins and carboxylic acids esters - US patent description no 4512775.

These and other depressants are obtained in the result of ionic copolymerization conducted most frequently at the presence of organometallic catalysts. A considerable part of known copolymers and polymers of the depressive properties are compounds of high molecular weight, about 10 000 -100 000, which are hardly soluble in diesel oil or basic lubricating oil. The depressants being copolymers of too high molecular weight require degradation to the molecular weight about 2000 -6000, as only copolymers of such a molecular weight value have good solubility in diesel and lubricating oils. The process of degradation is conducted at the presence of catalysts, and the above mentioned known copolymers used as depressants are obtained according to compound technological operations and on the basis of quite expensive monomers.

The purpose of the invention is elaboration of a less complicated method for obtaining of depressants of very good depressive properties, obtained on the basis of easily accessible raw materials. These raw materials appeared to be: waste polypropylene, which in the unprocessed form is only slightly soluble in mineral oils and only to a slight degree causes reduction of solidification temperature, and waste polyethylene, which is soluble in oils and causes reduction of their solidification temperature after being exposed to the process of degradation with simultaneous oxidation.

The clue of the method according to the invention is in the fact that waste polyethylene and/or waste polypropylene are exposed to oxydizing degradation conducted at the elevated temperature up to obtaining of the required degree of oxidation and degradation. According to the invention the degradation and oxidation agent is ozone passed through the bed of waste polyethylene and/or waste polypropylene heated to the temperature of 30 - 350°C. The process of oxidizing degradation is conducted under the pressure from 20 mmHg to 20 Atm, the time of operation is within the range from 10 seconds to 24 hours.

The method according to the invention enables obtaining of the depressant concentrate of the high content of high-molecular aliphatic ketones and other oxygen compounds and higher-molecular isoparaffin hydrocarbons of the required degree of degradation. The obtained product is added in the quantity from 0.01 to 10% by weight to diesel and lubricating oils, transformer oils, hydraulic oils and non-petrol fuels,for instance fuel for reaction engines, in order to reduce the solidification temperature.

The invention is explained more closely on the below examples.

Example I.

1000 g of waste amorphous polypropylene was heated to the temperature of 150°C and exposed to the action of ozone for 5 hours under the pressure of 760 mmHg. Next the obtained depressant was added to diesel oil in the quantity 0.1% by weight. The obtained depressant reduced the solidification temperature of oil from -21°C to -35°C and the temperature of the cold filter blocking from -9°C to -20°C.

Example II.

1000 g of waste greasy polyethylene was heated to the temperature of 170°C and exposed to the action of ozone for 0.5 hour under the pressure of 0.5 Atm. Next the obtained depressant was added to diesel oil in the quantity 0.1% by weight. There was observed the solidification temperature reduction from -17°C to -37°C and the reduction of the cold filter blocking temperature from -11°C to -26°C.

## Claims

1. The method for obtaining of depressant especially for fuels and lubricating oils, in which the compound showing depressing properties is exposed to degradation, specific by the fact that to oxidizing degradation there is exposed waste polyethylene and/or waste polypropylene, while conducting the above mentioned process at the elevated temperature up to obtaining the required degree of oxidation and degradation.

2. The method according to claim 1 specific by the fact that as the oxidation and degradation agent there is used ozone passed through the bed of waste polyethylene and/or waste polypropylene heated to the temperature 30 - 350°C for the time from 10 s to 24 h under the pressure from 10 mmHg to 20 Atm.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| Y | CHEMICAL ABSTRACTS, vol. 89, no. 10, September 1978, page 28, abstract no. 75883m, Columbus, Ohio, US; & JP-A-78 13 669 (FURUKAWA ELECTRIC CO., LTD) 11-05-1978 * Abstract * | 1,2 | C 08 F 8/50 C 08 F 8/06 C 10 L 1/16 |
| Y | FR-A-2 613 721 (P. GENSAC) * Claims 1-8 * | 1,2 | |
| Y | US-A-3 417 020 (A.F. PREUSS) * Claims 1,3; columns 1,2,5 * | 1,2 | |
| A | FR-A-1 240 510 (ESCAMBIA CHEMICAL CORP.) * Summary; page 1, column 2 - page 2, column 1 * | 1 | |
| A | CHEMICAL ABSTRACTS, vol. 79, no. 20, 19th November 1973, page 8, abstract no. 116000k, Columbus, Ohio, US; & JP-A-72 49 313 (SANYO CHEMICAL INDUSTRIES CO. LTD) 11-12-1972 * Abstract * | 1 | TECHNICAL FIELDS SEARCHED (Int. Cl.5) C 08 F |

The present search report has been drawn up for all claims

| Place of search | Date of completion of the search | Examiner |
|---|---|---|
| THE HAGUE | 26-10-1989 | PERMENTIER W.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)